# EUROPÄISCHE PATENTANMELDUNG

(11) **EP 2 402 122 A2**
(43) Veröffentlichungstag der Anmeldung: **04.01.2012**
(21) Anmeldenummer: 11167649.0
(22) Anmeldetag: 26.05.2011
(51) Int. Cl.: B25F 5/00

(54) **Handwerkzeuggerät**

(30) Priorität: 01.07.2010 DE 102010030825
(71) Anmelder: HILTI Aktiengesellschaft, 9494 Schaan (LI)
(72) Erfinder: Grazioli, Mario, 7000 Chur (CH)

(57) **Zusammenfassung**

Um den Betrieb von Handwerkzeuggeräten weiter zu verbessern, umfasst das Handwerkzeuggerät eine elektronische Sensoreinrichtung zum Erkennen der Lage und/oder einer Lageänderung des Handwerkzeuggeräts im Raum.

## Beschreibung

### Technisches Gebiet

Die Erfindung betrifft ein Handwerkzeuggerät, wie eine Bohrmaschine, ein Nagelgerät, ein handgeführtes Eintreibgerät oder ein Bolzensetzgerät.

### Stand der Technik

Bei dem Handwerkzeuggerät handelt es sich zum Beispiel um ein handgeführtes Eintreibgerät, wie es in den deutschen Offenlegungsschriften DE 10 2006 000 517 A1 und DE 10 2006 035 460 A1 offenbart ist. Bei dem Handwerkzeug kann es sich aber auch um ein Handgerät handeln, wie es in der deutschen Patentschrift DE 33 10 371 C1 offenbart ist.

### Darstellung der Erfindung

Aufgabe der Erfindung ist es, den Betrieb von Handwerkzeuggeräten, insbesondere im Hinblick auf die Betriebssicherheit und Bedienfreundlichkeit, weiter zu verbessern.

Die Aufgabe ist bei einem Handwerkzeuggerät, wie einer Bohrmaschine, einem Nagelgerät, einem handgeführtes Eintreibgerät oder einem Bolzensetzgerät, dadurch gelöst, dass das Handwerkzeuggerät eine elektronische Sensoreinrichtung zum Erkennen der Lage und/oder einer Lageänderung des Handwerkzeuggeräts im Raum erfasst. Die elektronische Sensoreinrichtung hat gegenüber mechanischen Lösungen den Vorteil, dass die Lage-und/oder Lageänderung des Handwerkzeuggeräts genauer erfasst werden kann. Darüber hinaus ist die elektronische Sensoreinrichtung kostengünstiger und weniger störanfällig.

Ein bevorzugtes Ausführungsbeispiel des Handwerkzeuggeräts ist dadurch gekennzeichnet, dass die elektronische Sensoreinrichtung steuerungsmäßig mit einer Steuereinrichtung verbunden ist. Die Verbindung zwischen der Sensoreinrichtung und der Steuereinrichtung kann mit Hilfe von Steuerleitungen oder drahtlos realisiert sein. Die Sensoreinrichtung kann gemäß einem weiteren Aspekt der Erfindung auch mit der Steuereinrichtung in einer gemeinsamen Steuerungselektronik kombiniert sein. Die elektronische Sensoreinrichtung liefert in Kombination mit der Steuereinrichtung darüber hinaus den Vorteil, dass mehrere unterschiedliche Funktionen in Abhängigkeit von der Lage oder Lageänderung des Handwerkzeugs gesteuert werden können. Dabei können die Signale der elektronischen Sensoreinrichtung auf einfache Art und Weise mit weiteren elektrischen oder elektronischen Signalen kombiniert werden.

Ein weiteres bevorzugtes Ausführungsbeispiel des Handwerkzeuggeräts ist dadurch gekennzeichnet, dass das Handwerkzeuggerät, bevorzugt die Steuereinrichtung, einen Speicher zur Speicherung der Lage und/oder Lageänderung und/oder Beschleunigung des Handwerkzeuggerätes umfasst. Informationen über die Lage bzw. Lageänderung bzw. Beschleunigung des Handwerkzeuggerätes können in dem Speicher abgelegt und/oder aus dem Speicher ausgelesen werden.

Ein weiteres bevorzugtes Ausführungsbeispiel des Handwerkzeuggeräts ist dadurch gekennzeichnet, dass die elektronische Sensoreinrichtung, zum Beispiel über die Steuereinrichtung, kontrollmäßig eine Triggerfreigabefunktion und/oder eine Triggersperrfunktion hat beziehungsweise ausübt. Als Trigger wird ein Auslöser des Handwerkzeuggeräts bezeichnet. Wenn der Trigger gesperrt ist, dann kann das Handwerkzeuggerät nicht betätigt werden.

Ein weiteres bevorzugtes Ausführungsbeispiel des Handwerkzeuggeräts ist dadurch gekennzeichnet, dass die elektronische Sensoreinrichtung, zum Beispiel über die Steuereinrichtung, kontrollmäßig eine Auslösefreigabefunktion und/oder eine Auslöseverhinderungsfunktion hat beziehungsweise ausübt. Dabei wird zum Beispiel ein Auslösen des Handwerkzeuggeräts, wie das Setzen eines Nagels oder eines Bolzens, geräteintern verhindert oder freigegeben.

Ein weiteres bevorzugtes Ausführungsbeispiel des Handwerkzeuggeräts ist dadurch gekennzeichnet, dass die elektronische Sensoreinrichtung, zum Beispiel über die Steuereinrichtung, kontrollmäßig eine Transportfreigabefunktion und/oder eine Transportsperrfunktion für Befestigungselemente hat beziehungsweise ausübt. Bei den Befestigungselementen handelt es sich zum Beispiel um Bolzen oder Nägel, die mit dem Handwerkzeug gesetzt werden. Nach einem Setzvorgang wird ein weiteres Befestigungselement in dem Handwerkzeuggerät in eine Setzposition transportiert. Diese Transportfunktion kann mit Hilfe der elektronischen Sensoreinrichtung gesperrt oder freigegeben werden.

Ein weiteres bevorzugtes Ausführungsbeispiel des Handwerkzeuggeräts ist dadurch gekennzeichnet, dass die elektronische Sensoreinrichtung, zum Beispiel über die Steuereinrichtung, kontrollmäßig eine Geräteaktivierungsfunktion und/oder eine Gerätedeaktivierungsfunktion hat beziehungsweise ausübt. Dadurch ist es zum Beispiel möglich, das Handwerkzeuggerät zu deaktivieren, wenn für eine gewisse Zeit keine Lageänderung des Handwerkzeuggeräts mit der elektronischen Sensoreinrichtung erfasst wird. Sobald eine Lageänderung von der elektronischen Sensoreinrichtung erfasst wird, kann das Handwerkzeuggerät wieder aktiviert werden.

Ein weiteres bevorzugtes Ausführungsbeispiel des Handwerkzeuggeräts ist dadurch gekennzeichnet, dass die elektronische Sensoreinrichtung, zum Beispiel über die Steuereinrichtung, kontrollmäßig eine Entriegelungsfunktion und/oder eine Verriegelungsfunktion hat beziehungsweise ausübt. Dabei wird zum Beispiel ein geräteinterner Mechanismus in Abhängigkeit von der Lage oder Lageänderung des Handwerkzeuggeräts verriegelt beziehungsweise entriegelt.

Ein weiteres bevorzugtes Ausführungsbeispiel des Handwerkzeuggeräts ist dadurch gekennzeichnet, dass die elektronische Sensoreinrichtung, zum Beispiel über die Steuereinrichtung, kontrollmäßig eine Stromversorgungsaktivierungsfunktion, eine Stromversorgungsdeaktivierungsfunktion und/oder eine Stromsparfunktion hat beziehungsweise ausübt. Wenn die Lage des Handwerkzeuggeräts zum Beispiel für eine bestimmte Zeit nicht verändert wird, dann wird zum Beispiel ein Schlafmodus eingeleitet, in welchem die Stromversorgung ganz oder teilweise deaktiviert ist. In dem Schlafmodus werden zum Beispiel nur sicherheitsrelevante Funktionen aufrechterhalten. Dabei bleibt insbesondere die elektronische Sensoreinrichtung beziehungsweise die Steuereinrichtung eingeschaltet, um die Stromversorgung des Handwerkzeuggeräts bei einer Lageänderung automatisch zu aktivieren.

Ein weiteres bevorzugtes Ausführungsbeispiel des Handwerkzeuggeräts ist dadurch gekennzeichnet, dass die elektronische Sensoreinrichtung, zum Beispiel über die Steuereinrichtung, kontrollmäßig eine Zwischenspeicheraktivierungsfunktion und/oder eine Zwischenspeicherdeaktivierungsfunktion hat beziehungsweise ausübt. Bei dem Zwischenspeicher handelt es sich zum Beispiel um einen Spannmechanismus mit einer Feder. Der Zwischenspeicher dient dazu, Antriebsenergie, zum Beispiel eines Elektromotors, zwischenzuspeichern. Bei einem Setzvorgang kann der Zwischenspeicher die gespeicherte Antriebsenergie schlagartig abgeben, um einen Bolzen oder Nagel zu setzen.

Ein weiteres bevorzugtes Ausführungsbeispiel des Handwerkzeuggeräts ist dadurch gekennzeichnet, dass die elektronische Sensoreinrichtung einen Inertialsensor umfasst. Inertialsensoren dienen zur Messung translatorischer und rotatorischer Beschleunigungskräfte. Durch eine Kombination mehrer Inertialsensoren in der erfindungsgemäßen Sensoreinrichtung können die Beschleunigungen in verschiedenen Raumrichtungen erfasst werden.

Das erfindungsgemäße Handwerkzeuggerät ist vorzugsweise als Nagelgerät, handgeführtes Eintreibgerät oder Bolzensetzgerät ausgeführt.

Die Erfindung betrifft des Weiteren ein Verfahren zum Betreiben des vorab beschriebenen Handwerkzeuggeräts.

Weitere Vorteile, Merkmale und Einzelheiten der Erfindung ergeben sich aus der nachfolgenden Beschreibung, in der verschiedene Ausführungsbeispiele im Einzelnen beschrieben sind.

### Ausführungsbeispiele

Die Erfindung betrifft ein Nagelgerät, das auch als Bolzensetzgerät bezeichnet wird. Das Bolzensetzgerät ist zum Beispiel als handgeführtes Eintreibgerät ausgeführt, wie es in den Figuren 1 bis 4 beziehungsweise 1 bis 2 und den zugehörigen Beschreibungen der deutschen Offenlegungsschriften DE 10 2006 000 517 A1 und DE 10 2006 035 460 A1 offenbart ist.

Das erfindungsgemäße Nagelgerät ist mit einer elektronischen Sensoreinrichtung zur Lageerkennung ausgestattet. Die elektronische Sensoreinrichtung ist steuerungsmäßig mit einer Steuereinrichtung verbunden. Die Steuereinrichtung übt in Abhängigkeit von der Lage oder einer Lageänderung des Nagelgeräts die Kontrolle über verschiedene Funktionen des Nagelgeräts aus.

Bei den Funktionen handelt es sich zum Beispiel um ein Anpressen des Nagelgeräts gegen eine Wand, bevor ein Nagel gesetzt wird. Mit Hilfe der erfindungsgemäßen Sensoreinrichtung kann auf einfache Art und Weise erfasst werden, ob das Nagelgerät zum Setzen des Nagels korrekt positioniert ist.

Mit der Steuereinrichtung kann des Weiteren ein Triggern des Nagelgeräts kontrolliert werden. Als Triggern wird das Betätigen eines Triggers oder Auslösers des Nagelgeräts bezeichnet. In ungünstigen Lagen des Nagelgeräts, die mit Hilfe der elektronischen Sensoreinrichtung erfasst werden, kann ein Triggern gesperrt werden. Das Triggern wird vorzugsweise erst dann freigegeben, wenn das Nagelgerät korrekt positioniert ist.

Des Weiteren kann ein Auslösen eines Nagelsetzvorgangs in dem Nagelgerät mit Hilfe der erfindungsgemäßen Sensoreinrichtung über die Steuereinrichtung kontrolliert werden. Ein Auslösen eines Nagelsetzvorgangs wird geräteintern vorzugsweise erst dann ermöglicht, wenn das Nagelgerät richtig positioniert ist.

Nach einem Nagelsetzvorgang kann ein weiterer Nagel in dem Nagelgerät positioniert werden. Mit Hilfe der erfindungsgemäßen Sensoreinrichtung kann erfasst werden, ob das Nagelgerät nach einem Nagelsetzvorgang abgesetzt wird. Es ist möglich, den nächsten Nagel erst dann in eine geeignete Setzposition zu bringen, wenn das Nagelgerät vorher abgesetzt wurde. Dadurch können unerwünschte Beschädigungen des Nagelgeräts aufgrund eines verklemmten Nagels in einer Nagelführung verhindert werden.

Die Sensoreinrichtung umfasst mindestens einen Inertialsensor, vorzugsweise mehrere Inertialsensoren. Mit diesen Sensoren können auf einfache Art und Weise lineare Beschleunigungskräfte und Rotationskräfte des Nagelgeräts erfasst werden. Die Steuereinrichtung umfasst eine Elektronik, mit deren Hilfe aus den Sensorsignalen Informationen über die Lage und eine Lageänderung des Nagelgeräts ermittelt werden können.

Bei der Sensoreinrichtung kann es sich zum Beispiel um ein MEMS (Micro-Electro-Mechanical-System)-Gyroskop handeln, wie es zum Beispiel bei der Bildstabilisierung von Digitalkameras oder in Eingabesystemen von Spielkonsolen verwendet wird.

Gemäß einem weiteren Aspekt der Erfindung wird das Nagelgerät in Abhängigkeit von den Signalen der elektronischen Sensoreinrichtung in einen Stromsparmodus überführt. Wenn zum Beispiel die Lage des Nagelgeräts für eine bestimmte Zeit nicht verändert wird, dann wird das Nagelgerät über die Steuereinrichtung in einen Schlafmodus überführt, um Strom zu sparen. In dem Schlafmodus wird die Lage beziehungsweise Lageänderung des Nagelgeräts weiter überwacht.

Sobald die Sensoreinrichtung eine Änderung der Lage des Nagelgeräts erfasst, wird das Nagelgerät wieder aktiviert. Die Aktivierung kann die Stromversorgung des Nagelgeräts betreffen. Die Aktivierung kann aber auch ein Entriegeln von Sicherheitsfunktionen, zum Beispiel ein Spannen einer Feder bei einem federbetriebenen Nagler, betreffen.

## Patentansprüche

1. Handwerkzeuggerät, wie Bohrmaschine, Nagelgerät, handgeführtes Eintreibgerät oder Bolzensetzgerät, **dadurch gekennzeichnet, dass** das Handwerkzeuggerät eine elektronische Sensoreinrichtung zum Erkennen der Lage und/oder einer Lageänderung des Handwerkzeuggeräts im Raum umfasst.

2. Handwerkzeuggerät nach Anspruch 1, **dadurch gekennzeichnet, dass** die elektronische Sensoreinrichtung steuerungsmäßig mit einer Steuereinrichtung verbunden ist.

3. Handwerkzeuggerät nach einem der vorhergehenden Ansprüche, **dadurch gekennzeichnet, dass** das Handwerkzeuggerät, insbesondere die Steuereinrichtung, einen Speicher zur Speicherung der Lage und/oder Lageänderung und/oder Beschleunigung des Handwerkzeuggerätes umfasst.

4. Handwerkzeuggerät nach einem der vorhergehenden Ansprüche, **dadurch gekennzeichnet, dass** die elektronische Sensoreinrichtung, zum Beispiel über die Steuereinrichtung, kontrollmäßig eine Auslösefreigabefunktion und/oder eine Auslöseverhinderungsfunktion hat beziehungsweise ausübt.

5. Handwerkzeuggerät nach einem der vorhergehenden Ansprüche, **dadurch gekennzeichnet, dass** die elektronische Sensoreinrichtung, zum Beispiel über die Steuereinrichtung, kontrollmäßig eine Triggerfreigabefunktion und/oder eine Triggersperrfunktion hat beziehungsweise ausübt.

6. Handwerkzeuggerät nach einem der vorhergehenden Ansprüche, **dadurch gekennzeichnet, dass** die elektronische Sensoreinrichtung, zum Beispiel über die Steuereinrichtung, kontrollmäßig eine Transportfreigabefunktion und/oder eine Transportsperrfunktion für Befestigungselemente hat beziehungsweise ausübt.

7. Handwerkzeuggerät nach einem der vorhergehenden Ansprüche, **dadurch gekennzeichnet, dass** die elektronische Sensoreinrichtung, zum Beispiel über die Steuereinrichtung, kontrollmäßig eine Geräteaktivierungsfunktion und/oder eine Gerätedeaktivierungsfunktion hat beziehungsweise ausübt.

8. Handwerkzeuggerät nach einem der vorhergehenden Ansprüche, **dadurch gekennzeichnet, dass** die elektronische Sensoreinrichtung, zum Beispiel über die Steuereinrichtung, kontrollmäßig eine Entriegelungsfunktion und/oder eine Verriegelungsfunktion hat beziehungsweise ausübt.

9. Handwerkzeuggerät nach einem der vorhergehenden Ansprüche, **dadurch gekennzeichnet, dass** die elektronische Sensoreinrichtung, zum Beispiel über die Steuereinrichtung, kontrollmäßig eine Stromversorgungsaktivierungsfunktion, eine Stromversorgungsdeaktivierungsfunktion und/oder eine Stromsparfunktion hat beziehungsweise ausübt.

10. Handwerkzeuggerät nach einem der vorhergehenden Ansprüche, **dadurch gekennzeichnet, dass** die elektronische Sensoreinrichtung, zum Beispiel über die Steuereinrichtung, kontrollmäßig eine Zwischenspeicheraktivierungsfunktion und/oder eine Zwischenspeicherdeaktivierungsfunktion hat beziehungsweise ausübt.

11. Handwerkzeuggerät nach einem der vorhergehenden Ansprüche, **dadurch gekennzeichnet, dass** die elektronische Sensoreinrichtung einen Inertialsensor umfasst.
